**Europäisches Patentamt**

**European Patent Office**

**Office européen des brevets**

(19)

(11) Veröffentlichungsnummer: **0 071 793**
**B1**

(12) # EUROPÄISCHE PATENTSCHRIFT

(45) Veröffentlichungstag der Patentschrift:
**10.04.85**

(21) Anmeldenummer: **82106337.7**

(22) Anmeldetag: **15.07.82**

(51) Int. Cl.⁴: **C 08 F 6/28,** C 08 F 10/02

(54) **Verfahren zum Desodorieren feinteiliger, mittels Ziegler-Katalysatoren erhaltener Ethylenpolymerisate.**

(30) Priorität: **31.07.81 DE 3130304**

(43) Veröffentlichungstag der Anmeldung:
**16.02.83 Patentblatt 83/7**

(45) Bekanntmachung des Hinweises auf die Patenterteilung:
**10.04.85 Patentblatt 85/15**

(84) Benannte Vertragsstaaten:
**AT BE DE FR GB IT NL**

(56) Entgegenhaltungen:
**FR - A - 2 185 639**
**GB - A - 1 272 778**

(73) Patentinhaber: **BASF Aktiengesellschaft,
Carl-Bosch-Strasse 38, D-6700 Ludwigshafen (DE)**

(72) Erfinder: **Jaggard, James F.R., Dr., Bordollo Ring 21,
D-6718 Gruenstadt (DE)**
Erfinder: **Best, Walter, Dr., Im Spiess 2,
D-6714 Weisenhelm (DE)**
Erfinder: **Klaerner, Peter, Dr., Hauptstrasse 62,
D-6719 Battenberg (DE)**
Erfinder: **Blel, Peter, Berliner Strasse 16, D-6702 Bad
Duerkhelm (DE)**

### Beschreibung

Die Erfindung liegt im Rahmen eines Verfahrens zum Desodorieren feinteiliger, einen Teilchendurchmesser von 1 bis 6000, insbesondere 50 bis 3000 µm aufweisender, unmittelbar durch Homopolymerisation von Ethylen oder Copolymerisation von Ethylen mit bis zu 30, insbesondere bis zu 20 Mol-% $C_3$- bis $C_{10}$-, insbesondere $C_3$- bis $C_8$-α-Monoolefinen unter Anwendung von Ziegler-Katalysatoren erhaltener Olefinpolymerisate mittels eines die Olefinpolymerisate bei einer Temperatur, die wenigstens 10, vorzugsweise wenigstens 30°C, unter der Kristallitschmelztemperatur des jeweils betroffenen Olefinpolymerisats liegt, durchströmenden, die Geruchsstoffe aufnehmenden Mediums, wobei dieses Medium eine Kohlenstoffverbindung ist.

Verfahren dieser Art sind bekannt, wobei auf das in der GB-PS Nr. 1272778 beschriebene als Prototyp hingewiesen werden kann.

Der technische Erfolg der bekannten Verfahren ist nicht zu bestreiten, doch haftet ihnen insofern ein gewisses Manko an, als die Verweilzeit der feinteiligen Olefinpolymerisate in dem durchströmenden Medium relativ lang gewählt werden muss.

Hier setzt die Aufgabe an, die zur vorliegenden Erfindung geführt hat: Ein Verfahren der eingangs definierten Art aufzuzeigen, das mit dem vorerwähnten Nachteil nicht mehr belastet ist, d.h. die Wahl kurzer Verweilzeiten erlaubt, ohne deshalb den sonstigen technischen Erfolg zu verringern.

Es wurde nun gefunden, dass die gestellte Aufgabe mit ausgewählten Medien gelöst werden kann, wenn die Durchströmung der Olefinpolymerisate bei einer bestimmten — insbesondere einer relativ niederen — Temperatur stattfindet und das durchströmende Medium unter einem hohen Druck sowie auch in einer bestimmten Menge angewendet wird.

Gegenstand der vorliegenden Erfindung ist dementsprechend ein Verfahren zum Desodorieren feinteiliger, einen Teilchendurchmesser von 1 bis 6000, insbesondere 50 bis 3000 µm aufweisender, unmittelbar durch Homopolymerisation von Ethylen oder Copopolymerisation von Ethylen mit bis zu 30, insbesondere bis zu 20 Mol-% $C_3$- bis $C_{10}$-, insbesondere $C_3$- bis $C_8$-α-Monoolefinen, unter Anwendung von Ziegler-Katalysatoren erhaltener Olefinpolymerisate mittels eines die Olefinpolymerisate bei einer Temperatur, die wenigstens 10, vorzugsweise wenigstens 30°C, unter der Kristallitschmelztemperatur des jeweils betroffenen Olefinpolymerisates liegt, durchströmenden, die Geruchsstoffe aufnehmenden Mediums, wobei dieses Medium eine Kohlenstoffverbindung ist.

Das erfindungsgemässe Verfahren ist dadurch gekennzeichnet, dass die Kohlenstoffverbindung i) ein nicht mehr als drei Kohlenstoffatome, vorzugsweise ein zwei oder drei Kohlenstoffatome aufweisendes Alkan oder Alken, ii) ein fluoriertes und/oder chloriertes Methan oder Ethan, oder iii) Kohlendioxid ist, und dass die Durchströmung bei einer Temperatur von 5 bis 120, insbesondere 5 bis 110°C, stattfindet und das durchströmende Medium unter einem Druck von 30 bis 300 bar sowie in einer Menge von 0,1 bis 20, insbesondere 1 bis 15 $Nm^3$/kg Olefinpolymerisat angewendet wird.

Die Bedingung mit dem grössten Gewicht ist hierbei die Druckbedingung, gefolgt von der Temperaturbedingung. Vornehmlich sind es auch diese Bedingungen, die das erfindungsgemässe Verfahren von den bekannten absetzen.

Durch das neue Verfahren wird es möglich, mit kurzen Verweilzeiten der feinteiligen Olefinpolymerisate in dem durchströmenden Medium zu arbeiten. Mitunter reichen bereits Verweilzeiten von 3 min aus, wenn erstere auch im allgemeinen 5 bis 120 und insbesondere 15 bis 60 min betragen sollten.

Das Verfahren bewirkt nicht nur eine effektive Desodorierung der Olefinpolymerisate, sondern auch eine deutliche Abnahme der in diesen ursprünglich enthaltenen niedermolekularen Anteile.

Die Durchführung des erfindungsgemässen Verfahrens ist einfach und kann mit bekannten, zur Durchströmung feinteiliger Feststoffe mit einem unter hohem Druck stehenden Medium konzipierten Vorrichtungen durchgeführt werden. Insoweit ist das neue Verfahren mit keinen Besonderheiten verbunden.

Nachstehend ist — in Verbindung mit der anhängenden Figur — eine zweckmässige Ausgestaltung des erfindungsgemässen Verfahrens, so wie es auch in den Beispielen durchgeführt wird — rein schematisch — dargestellt:

Das zur Durchströmung bestimmte Medium wird mit Hilfe des Förderaggregats 1 und des Wärmeaustauschers 2 auf die gewünschten Druck- und Temperaturbedingungen gebracht. Über das Ventil 3 und den Sintermetallfilter 4 wird das so temperierte und komprimierte Medium in den Druckbehälter 5 eingeleitet. Dieser ist mit dem zu desodorierenden Olefinpolymerisat gefüllt. Der Druckbehälter selbst wird mit einer Temperaturregelvorrichtung auf der gewünschten Arbeitstemperatur gehalten. Das am Boden des Druckbehälters 5 eintretende Medium durchströmt das Olefinpolymerisat, nimmt die in letzterem enthaltenen Geruchsstoffe sowie auch niedermolekulare Anteile auf und verlässt über die Sintermetallfritte 6 und das Feindosierventil 7 den Druckbehälter. Im Feindosierventil erfolgt Entspannung auf Atmosphärendruck. Gleichzeitig wird so viel frisches Medium dem Druckbehälter zugeführt, dass in diesem der Druck konstant bleibt.

Wie sich gezeigt hat, gibt es für die einzelnen Medien individuelle Temperatur/Druck-Verhältnisse, bei denen jeweils besonders gute Ergebnisse erhalten werden. Durch einfache Versuche lassen sich diese Verhältnisse leicht ermitteln. Für einige Medien sind besonders zweckmässige Temperatur- sowie Druckbereiche in der nachstehenden Tabelle angegeben.

| Medium Art | Bereiche | |
|---|---|---|
| | Temperatur (°C) | Druck (bar) |
| Ethan | 30 bis 50 | 50 bis 100 |
| Propan | 95 bis 110 | 40 bis 60 |
| Ethylen | 10 bis 50 | 50 bis 120 |
| Propylen | 90 bis 110 | 45 bis 120 |
| $CHF_3$ | 25 bis 45 | 45 bis 120 |
| $CO_2$ | 30 bis 60 | 70 bis 120 |

Ausser den in der Tabelle genannten kommen für den erfindungsgemässen Zweck als Medien z.B. noch in Betracht Methan, Cyclopropan, $CH_3F$, $CF_4$, $CH_3Cl$, $CHF_2Cl$, $CF_3Cl$, $CF_2Cl_2$, $FH_2C-CH_3$, $FH_2C-CH_2F$, $F_3-CH_2F$ bzw. Gemische aus zwei oder mehr der vorstehend sowie in der Tabelle als Einzelindividuen aufgeführten Medien.

Es hat sich ferner gezeigt, dass es nach dem Arbeiten mit Medien, die einen Eigengeruch besitzen, wie Alkane und Alkene, im allgemeinen zweckmässig ist, die mit Restmengen an diesen Medien behafteten Olefinpolymerisate mit einem geruchsneutralen Gas, wie Stickstoff oder Kohlendioxid, nachzuspülen.

Die nach dem erfindungsgemässen Verfahren zu desodorierenden Olefinpolymerisate sind solche, die in feinteiliger Form unmittelbar durch Polymerisation mittels Ziegler-Katalysatoren erhalten worden sind. Hierzu zählen Olefinpolymerisate, die erhalten worden sind durch Fällungspolymerisation in einem flüssigen, inerten Kohlenwasserstoff, in dem das Monomere bzw. das Monomerengemisch löslich, das Polymerisat dagegen unlöslich ist, sowie Olefinpolymerisate, die in einem trockenen Bett aus feinteiligem Olefinpolymerisat, d.h. durch sogenannte Gasphasenpolymerisation, erhalten worden sind, z.B. in einem gewirbelten Bett (= Wirbelbettverfahren) oder einem gerührten Bett (Festbettverfahren). Diese Varianten der Polymerisation sind wohlbekannt und in der Technik eingeführt.

Sinngemäss gilt das gleiche für die dabei zur Polymerisation eingesetzten Ziegler-Katalysatoren; es sind dies in der Regel bekanntlich Katalysatoren auf der Basis von I) einer — gegebenenfalls auf einem Trägerstoff befindlichen — Titankomponente, insbesondere Titanchloridkomponente, und II) einer Aluminiumalkylkomponente der allgemeinen Formel $AlR_3$ bzw. $ClAlR_2$ — worin R für einen $C_1$- bis $C_8$-Alkylrest steht — im Atomverhältnis Titan aus der Katalysatorkomponente I/Aluminium aus der Katalysatorkomponente II von 1:1 bis 1:100. Mittels solcher Katalysatoren hergestellte Olefinpolymerisate lassen sich jedenfalls nach dem erfindungsgemässen Verfahren besonders gut desodorieren und auch in ihrem Gehalt an niedermolekularen Anteilen reduzieren. Dabei spielt es eine untergeordnete Rolle, welcher Art im einzelnen die zur Polymerisation eingesetzte Titanchloridkomponente I gewesen ist; so können es z.B. gewesen sein: titanhaltige Trägerkatalysatoren, wie sie z.B. in den US-PS Nrn. 4113933 und 4110523, den GB-PS Nrn. 1411717 und 1565572 oder den EP-OS Nrn. 4966 und 21605 beschrieben sind.

Die Olefinpolymerisate selbst sind Homopolymerisate des Ethylens oder Copolymerisate des Ethylens mit bis zu 30 Mol-% $C_3$- bis $C_{10}$-$\alpha$-Monoolefinen. Als Olefinpolymerisate des letztgenannten Typs kommen z.B. in Betracht binäre Copolymerisate von Ethylen mit Buten-(1), Hexen-(1) oder Okten-(1) oder ternäre Copolymerisate des Ethylens mit zwei der vorerwähnten $\alpha$-Olefine.

Zur Veranschaulichung der Erfindung dienen die nachstehend beschriebenen Beispiele; in ihnen wird durchweg zum Desodorieren eingesetzt ein feinteiliges, einen Teilchendurchmesser von 63 bis 2000 µm aufweisendes, unmittelbar durch Homopolymerisate von Ethylen mittels eines Ziegler-Katalysators gemäss der GB-PS Nr. 1565572, Beispiel 1, erhaltenes, eine Kristallitschmelztemperatur von 130°C besitzendes Polyethylen.

*Beispiele 1 bis 6:*

Zu ihrer Durchführung dient eine an sich bekannte Vorrichtung, wie sie weiter oben sowie in der anhängenden Figur erläutert ist; das Nutzvolumen des Druckbehälters 5 beträgt 0,3 l und ist in allen Beispielen mit dem vorgenannten feinteiligen Polyethylen zu 80% ausgefüllt.

In der Tabelle 1 ist angegeben, welches Medium bei welcher Temperatur unter welchem Druck in welcher Menge über welche Zeitspanne in den einzelnen Beispielen angewendet wird, ferner die dadurch erreichte Änderung (= Verminderung) des Geruchs in Geruchsnoteneinheiten ($\Delta$ GNE) nach DIN 10 955 (2 h bei 80°C), wobei als Standardvergleichsmuster das unbehandelte Polyethylen dient.

*Tabelle 1*

| Beispiel Nr. | Medium Art | Temperatur (°C) | Druck (bar) | Menge ($Nm^3$/kg) | Zeit (min) | $\Delta$ GNE DIN 10 955 |
|---|---|---|---|---|---|---|
| 1 | $CO_2$ | 40 | 100 | 3,0 | 10 | −2,0 |
| 2 | Ethan | 40 | 100 | 3,0 | 19 | −1,5 |
| 3 | Ethylen | 40 | 100 | 3,0 | 16 | −2,0 |
| 4 | Propan | 105 | 50 | 2,5 | 16 | −3,5 |
| 5 | Propylen | 100 | 50 | 2,5 | 16 | −3,5 |
| 6 | $CHF_3$ | 40 | 55 | 3,5 | 20 | −1,5 |

*Vergleichsversuche 1 bis 6:*

Es wird in völliger Analogie zu den Beispielen gearbeitet, mit den drei einzigen Ausnahmen, dass die Behandlungstemperatur einheitlich 105°C, der Behandlungsdruck einheitlich 4 bar und die Behandlungszeit jeweils das dreifache betragen. Die hierbei erhaltenen Ergebnisse finden sich in der Tabelle 2.

*Tabelle 2*

| Vergl.-Vers. Nr. | Medium Art | $\Delta$ GNE DIN 10955 |
|---|---|---|
| 1 | $CO_2$ | −1,0 |
| 2 | Ethan | −0,5 |
| 3 | Ethylen | −1,0 |
| 4 | Propan | −0,4 |
| 5 | Propylen | −0,4 |
| 6 | $CHF_3$ | −0,5 |

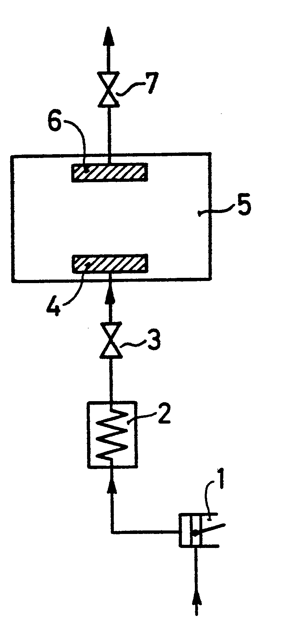

**Patentanspruch**

Verfahren zum Desodorieren feinteiliger, einen Teilchendurchmesser von 1 bis 6000 μm aufweisender, unmittelbar durch Homopolymerisation von Ethylen oder Copolymerisation von Ethylen mit bis zu 30 Mol-% $C_3$- bis $C_{10}$-α-Monoolefinen unter Anwendung von Ziegler-Katalysatoren erhaltener Olefinpolymerisate mittels eines die Olefinpolymerisate bei einer Temperatur, die wenigstens 10°C unter der Kristallitschmelztemperatur des jeweils betroffenen Olefinpolymerisats liegt, durchströmenden, die Geruchsstoffe aufnehmenden Mediums, wobei dieses Medium eine Kohlenstoffverbindung ist, dadurch gekennzeichnet, dass die Kohlenstoffverbindung i) ein nicht mehr als drei Kohlenstoffatome aufweisendes Alkan oder Alken, ii) ein fluoriertes und/oder chloriertes Methan oder Ethan, oder iii) Kohlendioxid ist, und dass die Durchströmung bei einer Temperatur von 5 bis 120°C stattfindet und das durchströmende Medium unter einem Druck von 30 bis 300 bar sowie in einer Menge von 0,1 bis 20 Nm³/kg Olefinpolymerisat angewendet wird.

**Claim**

A process for deodorizing a finely divided olefin polymer which has a particle diameter of from 1 to 6,000 μm and has been obtained directly by homopolymerization of ethylene or copolymerization of ethylene with up to 30 mol-% of a $C_3$ to $C_{10}$-α-monoolefin, in the presence of a Ziegler catalyst, by means of a medium which flows through the olefin polymer at a temperature at least 10°C below the crystallite melting-point of the particular polymer and takes up the odoriferous substances, this medium being a hydrocarbon compound, wherein the hydrocarbon compound is (i) an alkane or alkene of not more than three carbon atoms, (ii) a fluorinated and/or chlorinated methane or ethane, or (iii) carbon dioxide, and flows through the polymer at from 5 to 120°C, under a pressure of from 30 to 300 bar, and in an amount of from 0.1 to 20 Nm³/kg (S.T.P.) of olefin polymer.

**Revendication**

Procédé pour la désodorisation de polymères oléfiniques finement divisés, présentant un diamètre de particules de 1 à 6000 μm, obtenus directement par homopolymérisation d'éthylène ou par copolymérisation d'éthylène avec jusqu'à 30 mol % d'α-monooléfines en $C_3$ à $C_{10}$ avec utilisation de catalyseurs de Ziegler, au moyen d'un milieu qui absorbe les substances odorantes et qui passe à travers le polymère oléfinique à une température se situant au moins à 10°C au-dessous de la température de fusion des cristallites du polymère oléfinique en question, ce milieu étant un composé carboné, caractérisé en ce que le composé carboné est i) un alcane ou un alcène ne comportant pas plus de trois atomes de carbone, ii) un méthane ou un éthane fluoré et/ou chloré, ou iii) l'anhydride carbonique, et en ce que le passage a lieu à une température de 5 à 120°C et le milieu traversant est utilisé sous une pression de 30 à 300 bar et dans une proportion de 0,1 à 20 Nm³/kg de polymère oléfinique.